# FASCICULE DE BREVET EUROPEEN

(11) **EP 1 289 897 B1**
(45) Date de publication et mention de la délivrance du brevet: **28.01.2004**
(21) Numéro de dépôt: 01940694.1
(22) Date de dépôt: 06.06.2001
(51) Int. Cl.: C03C 8/02, C03C 8/14, C03C 8/16, C03C 8/22

(54) **COMPOSITION D'EMAIL NOIR A BASE D'EAU POUR SUBSTRAT EN VERRE**
ZUSAMMENSETZUNG EINER SCHWARZEN GLASUR AUF EINEM GLASSUBSTRAT
AQUEOUS BLACK ENAMEL COMPOSITION FOR GLASS SUBSTRATE

(30) Priorité: 09.06.2000 FR 0007409
(43) Date de publication de la demande: 12.03.2003
(73) Titulaire: SAINT-GOBAIN GLASS FRANCE, 92400 Courbevoie (FR)
(72) Inventeur: BEYRLE, André, F-60170 Tracy le Val (FR)
(74) Mandataire: Muller, René
(86) Numéro de dépôt international: PCT/FR2001/001736
(87) Numéro de publication internationale: WO 2001/094269

(56) Documents cités:
- EP-A- 0 658 522
- FR-A- 1 019 192
- FR-A- 2 179 526
- SU-A- 773 031
- US-A- 5 698 025

## Description

L'invention se rapporte à une composition d'émail noir à base d'eau apte à être déposée sur un substrat en verre ainsi que les substrats émaillés résultants, en particulier les vitrages émaillés.

Il est connu d'utiliser des compositions d'émail sur des substrats en verre, notamment des vitrages pour l'automobile ou le bâtiment, pour former des dépôts de toute sorte, par exemple des couches décoratives, conductrices, protectrices ou destinées à former des masques.

Ces compositions d'émail servent notamment à former la bande périphérique opaque, de couleur sombre, en général pleine mais pouvant aussi comporter des jours, que l'on trouve sur les pare-brise, les vitres latérales et les lunettes arrières des véhicules automobiles. Le rôle de la bande est double. D'une part, elle permet de préserver l'intégrité de l'adhésif situé sous le vitrage, lorsque ce dernier est monté par collage dans la baie de carrosserie, en formant un écran aux rayonnements solaires, plus particulièrement aux rayons ultraviolets. D'autre part, elle améliore l'aspect extérieur du véhicule en masquant les éléments de connexion, électrique ou autre, situés en bordure de la face interne du vitrage, comme c'est le cas notamment pour les lunettes arrières.

En général, les compositions d'émail utiles pour former une telle bande sont formées d'une poudre comprenant une fritte de verre (devant former la matrice vitreuse) et des pigments (en tant que colorants gris ou noirs notamment, ces pigments pouvant faire partie de la fritte), et d'un médium. Les pigments sont le plus souvent des oxydes métalliques, tels que les oxydes de chrome, de cobalt, de nickel et de fer, qui ne réagissent pas avec les autres constituants de la composition. Le médium assure la mise en suspension correcte des particules solides et permet l'application et l'adhésion temporaire de l'émail sur le substrat. Le médium contient généralement des solvants organiques tel que l'huile de pin ou les terpènes, des huiles minérales, des diluants et/ou des résines, ou des composants susceptibles de réticuler sous un rayonnement UV.

La composition d'émail est généralement déposée à la surface du substrat en verre par sérigraphie, pulvérisation ou enduction au rideau ou au rouleau, puis elle est fixée sur le verre. L'opération de fixation est nécessaire pour permettre de manipuler le substrat, par exemple en vue de le bomber et/ou de le tremper, sans risquer d'endommager la couche d'émail. Selon le médium utilisé, la fixation peut consister en un séchage, effectué par exemple par simple chauffage à une température modérée (de l'ordre de 80-150°C) afin d'éliminer le(s) solvant(s) organique(s), ou en un durcissement sous UV lorsque le médium est apte à réticuler.

Un des problèmes des compositions d'émail existantes est la présence de solvants, notamment organiques. En raison de la toxicité de certains d'entre eux à l'encontre des utilisateurs, et aussi des risques qu'ils peuvent présenter pour l'environnement, on a cherché à les remplacer par de l'eau.

On connaît des compositions d'émail à base d'eau qui contiennent un silicate de sodium hydrosoluble, une base hydrosoluble, une poudre d'oxyde(s) métallique(s) et une fritte de verre ayant une température de fusion inférieure à 1300°F (= 704°C) (US-A-5 518 535), et aussi de l'oxyde de zinc (US-A-5 698 026) ou des particules de verre ayant une température de fusion supérieure à 1700°F (= 926°C) (US-A-5 677 064).

Les compositions à base d'eau qui viennent d'être citées présentent cependant des inconvénients. Avec ces compositions, on peut difficilement obtenir un dépôt présentant une fusibilité compatible avec les conditions de température appliquées lors du formage des vitrages feuilletés. En effet, à la température appliquée, laquelle n'excède généralement pas 650°C (température du verre), l'émail a tendance à présenter une capillarité résiduelle du fait d'un frittage insuffisant. Par ailleurs, l'émail obtenu dans les conditions du bombage n'a pas les propriétés escomptées en matière de couleur. Sur du verre clair (non teinté), l'émail formé a une teinte grise plus ou moins intense, cette teinte étant en outre chromatiquement non neutre. Selon le type de pigment(s) utilisé(s), l'absence de neutralité chromatique se traduit par une coloration grise tendant vers le rouge, le vert, le bleu ou le jaune. Enfin, si sur du verre teinté il est possible d'obtenir un émail noir, cette coloration n'a pas « l'intensité » (ou la « profondeur ») souhaitée, notamment elle présente une valeur de L* largement supérieure à celle qui est définie plus loin dans le texte.

La présente invention propose une nouvelle composition d'émail à base d'eau qui permet de remédier aux inconvénients précités. La composition conforme à l'invention est apte à être déposée sur un substrat en verre, présente un excellent accrochage sur le verre après séchage (et de ce fait une excellente résistance à la rayure), est dénuée de caractère collant (« anti-stick ») aux températures de bombage, et permet d'obtenir, après cuisson, un émail noir formant un dépôt uniforme et présentant une bonne durabilité.

Un autre objet de l'invention concerne une composition d'émail apte à être déposée sur un substrat en verre clair pour former un émail noir neutre chromatiquement, cette composition présentant en outre les avantages de la composition définie au paragraphe précédent.

Un autre objet de l'invention concerne les substrats en verre revêtus des compositions d'émail précitées, notamment des vitrages émaillés, en particulier feuilletés, pour l'automobile.

Dans la présente invention, on entend par « composition d'émail » la composition de l'émail considérée avant sa cuisson, l'émail après cuisson étant essentiellement sous la forme d'une matrice vitreuse colorée.

Par « émail noir », on entend selon l'invention un émail qui, après cuisson, présente une valeur de L* inférieure ou égale à 8, de préférence inférieure ou égale à 6.

Par « émail noir neutre chromatiquement », on entend selon l'invention un émail qui, après cuisson, présente les coordonnées colorimétriques suivantes, en valeurs absolues :
L* ≤ 8 ; |a*| ≤ 1 et |b*| ≤ 1 et, de préférence L* ≤ 6 ; |a*| ≤ 0,6 et |b*| ≤ 0,6.

Les coordonnées colorimétriques L*, a* et b* ont été définies et proposées en 1931 par la Commission Internationale de l'Eclairage (CIE) et ont fait l'objet d'une recommandation officielle CIE en 1976 (Commission Internationale de l'Eclairage, Colorimetry - Recommandations Officielles - Publication CIE n° 15-2, Vienne, 1986) Les coordonnées colorimétriques indiquées ci-dessus sont mesurées en réflexion, avec un spectrocolorimètre Minolta CM 2002, sous illuminant D₆₅ avec un angle d'observation de 10° et en mode spéculaire exclu.

Par « verre clair », on entend ici un verre dont le facteur de transmission lumineuse T_{L} sous illuminant D₆₅ est supérieur ou égal à 90 %, mesuré sur une feuille de verre à faces parallèles de 4 mm d'épaisseur.

Selon l'invention, la composition d'émail noir à base d'eau apte à être déposée sur un substrat en verre, notamment un vitrage, comprend :
- 20 à 40 % en poids de silicate de sodium et/ou de potassium hydrosoluble
- une base hydrosoluble, en quantité suffisante pour que le pH de la composition soit d'au moins 10,5
- 5 à 25 % en poids d'eau
- 40 à 60 % en poids d'oxyde métallique choisi dans le groupe constitué par les oxydes de cuivre, les oxydes de fer, les oxydes de cobalt, les mélanges de ces oxydes, et les mélanges d'au moins un desdits d'oxydes et d'oxyde(s) de chrome
- moins de 10 % en poids d'oxyde de zinc
- au moins 10 % en poids d'une fritte de verre ayant une température de fusion inférieure à 680°C
- moins de 10 % en poids d'une fritte de verre ayant un point de Littleton supérieur à 700°C.

Dans la présente invention, l'expression « température de fusion » a la signification communément admise dans le domaine des émaux, à savoir qu'elle désigne la température à laquelle une fritte de verre est suffisamment fondue pour s'accrocher au verre sur lequel elle est déposée et former une couche vitreuse imperméable. Cette « température de fusion » est aussi dénommée « température de cuisson » ou « température de fusibilité ». Elle correspond à la température minimale à laquelle la fritte présente un frittage « suffisant », ce frittage « suffisant » se traduisant par une disparition de l'effet de capillarité. En pratique, cela consiste pour l'homme du métier à déterminer la température à laquelle une fritte déposée sur un substrat en verre doit être cuite pour former une couche de porosité telle qu'un liquide ne puisse pas la traverser. Par la suite, la « fritte de verre ayant une température de fusion inférieure à 680°C » est dénommée « fritte à bas point de fusion ».

Selon l'invention également, l'expression « point de Littleton » (ou « (Littleton) softening point » en anglais) a la signification reconnue dans le domaine du verre. Le « point de Littleton » correspond à la température d'un verre ayant une viscosité égale à 10^{7,6} Poises, mesuré dans les conditions normalisées (ASTM C 338). Par la suite, la « fritte de verre ayant un point de Littleton supérieur à 700°C » est dénommée « fritte réfractaire ».

Selon l'invention, le silicate de sodium et/ou de potassium hydrosoluble représente 20 à 40 % en poids, de préférence 20 à 30 % en poids de la composition d'émail. Le silicate peut comprendre un seul silicate de sodium ou de potassium ou un mélange de plusieurs silicates de sodium et/ou de potassium. De manière préférée, la composition d'émail est exempte de silicate de potassium.

L'eau représente 5 à 25 % en poids de la composition, de préférence 10 à 20 % en poids.

La base hydrosoluble selon la présente invention est utilisée en quantité suffisante pour que le pH de la composition soit d'au moins 10,5, de préférence supérieur à 12,5 et mieux encore supérieur à 13,5. On peut pour cela utiliser tout type de base connue soluble dans l'eau, par exemple l'hydroxyde de sodium ou de potassium. On préfère l'hydroxyde de sodium. Le caractère fortement basique permet notamment d'assurer une bonne conservation de la composition au cours du temps.

L'oxyde métallique représente 40 à 60 % en poids de la composition selon l'invention, de préférence 50 à 60 % en poids. L'oxyde métallique est choisi dans le groupe constitué par les oxydes de cuivre, les oxydes de fer, les oxydes de cobalt, les mélanges de ces oxydes, et les mélanges d'oxyde(s) de chrome et d'au moins un desdits oxydes qui permettent de conférer à l'émail la coloration noire désirée. De préférence, l'oxyde métallique est choisi parmi les mélanges d'oxyde(s) de chrome et d'oxyde(s) de cuivre et/ou de fer.

Dans un mode de réalisation avantageux, notamment lorsque le substrat à revêtir est en verre clair, l'oxyde métallique est le chromite de cuivre (Cr₂O₃.CuO), le chromite de fer (Cr₂O₃.FeO) ou un mélange de ces chromites (de préférence contenant plus de 50 % en poids de chromite de cuivre). De manière particulièrement préférée, l'oxyde métallique est entièrement constitué de chromite de cuivre.

L'oxyde métallique se présente généralement sous une forme finement divisée, la taille moyenne des particules étant inférieure à 7 µm, de préférence comprise entre 5 et 7 µm, et avantageusement inférieure à 5 µm.

L'oxyde de zinc représente moins de 10 % en poids de la composition selon l'invention, de préférence 1 à 6 % en poids et mieux encore 4 à 6 % en poids. L'oxyde de zinc joue le rôle de promoteur d'adhérence des composants de la composition sur le verre. Il a pour effet d'améliorer la compatibilité de l'émail avec le verre en réduisant notamment l'écart entre les coefficients de dilatation de l'émail et du verre.

La fritte à bas point de fusion représente au moins 10 % en poids de la composition selon l'invention, de préférence 10 à 30 % et mieux encore 10 à 25 %. A titre d'exemples, on peut citer les frittes de verre bismuth-borosilicate, les frittes de verre zinc-borosilicate et les frittes de verre plomb-borosilicate (même si ces dernières ne sont pas souhaitées, essentiellement pour raisons liées à la présence de plomb dans l'environnement). La fritte de verre selon l'invention peut être constituée d'une seule fritte ou d'un mélange de plusieurs frittes choisies parmi les frittes précitées. De manière avantageuse, notamment lorsque la teneur dépasse 20 %, la fritte est une fritte de verre bismuth-borosilicate ou zinc-borosilicate renfermant des germes de nucléation susceptibles de rendre la fritte apte à cristalliser. L'emploi d'une telle fritte permet notamment d'améliorer les propriétés « anti-stick » de l'émail lors du bombage de verres par paire en vue de former des verres feuilletés, ce qui permet d'éviter le transfert de l'émail sur la face du verre en regard du dépôt. On préfère les frittes de verre bismuth-borosilicate, notamment parce qu'elles offrent une meilleure résistance aux agents chimiques. Dans un mode de réalisation préféré, notamment pour la production de vitrages feuilletés, la température de fusion de la fritte de verre est inférieure à 600°C, et est avantageusement comprise entre 500 et 600°C.

Dans la composition selon l'invention, la teneur en fritte réfractaire est inférieure à 10 % en poids, de préférence varie de 4 à 10 % et mieux encore est comprise entre 0 et 4 %. En général et de manière préférée, notamment lorsqu'elle concerne des vitrages feuilletés, la composition ne contient pas de fritte réfractaire. A titre d'exemples, on peut citer les frittes de verre sodo-calcique tel que le verre flotté (verre « float »). La fritte réfractaire se présente généralement sous la forme de particules dont la taille moyenne est inférieure à 20 µm, de préférence variant de 3 à 15 µm et mieux encore de 5 à 7 µm.

Outre les constituants essentiels précités, la composition selon l'invention peut contenir une faible quantité (en général moins de 1 % en poids, de préférence moins de 0,5 %) d'un tensioactif jouant le rôle d'agent de mouillage du verre.

Egalement, la composition selon l'invention peut contenir des ingrédients pour abaisser le coefficient de dilatation, du type frittes céramiques à faible coefficient de dilatation, notamment à base de zirconium ou d'alumine (silicate de zirconium ou silicate d'alumine) dans des proportions allant de 5 à 25 % et de préférence de 10 à 20 %.

La quantité ajoutée dépend de la composition de base de l'émail, de la composition du verre, du profil du bord du verre, de la position de l'émail vis-à-vis du bord du verre ; de l'épaisseur de l'émail.

En particulier l'ajout est plus important si l'émail est déposé jusqu'au bord du verre et si ce bord est façonné en arrondi favorisant alors les épaisseurs d'émail accrues et de l'ordre de 100 microns ou plus en extrême limite du verre. En effet du fait du fort coefficient de dilatation de ce type d'émail, il se produit alors dans le verre des contraintes d'extension qui peuvent être néfastes.

Les ingrédients abaisseurs de coefficient de dilatation étant infusibles, il est préférable de choisir leur granulométrie faible, de préférence inférieure à 20 microns, de façon à ne pas altérer l'aspect de l'émail, en particulier sa rugosité.

La composition selon l'invention peut être préparée par simple mélange des différents constituants dans un dispositif approprié, par exemple un broyeur à billes, pendant un temps suffisant pour obtenir un mélange homogène. Le mélange est généralement effectué à la température ambiante (de l'ordre de 25 à 30°C). On préfère toutefois procéder selon la méthode qui consiste à solubiliser le silicate de sodium, et le cas échéant le silicate de potassium, dans l'eau, de préférence sous agitation vigoureuse, et à ajouter à ladite solution les autres constituants de la composition, l'ordre d'introduction n'étant pas critique.

Le mélange obtenu est ensuite déposé sur un substrat en verre. Le verre utilisé peut appartenir à tout type de verre habituellement employé dans le domaine des vitrages pour l'automobile et le bâtiment, tel que le verre sodo-calcique (verre « float »).

Pour effectuer le dépôt sur le verre, on peut utiliser toute méthode connue dans le domaine considéré, par exemple par sérigraphie, pulvérisation ou enduction au rideau ou au rouleau. Lorsqu'on procède par sérigraphie, qui est la méthode préférée, il est recommandé de maintenir le dispositif adéquat dans des conditions d'humidité contrôlées, avantageusement sous une humidité relative proche de 80 à 85 %, comme décrit dans US-A-5 509 964.

La forme, la taille et le nombre des dépôts sur une ou plusieurs faces du substrat de verre dépendent largement de l'usage auquel on le destine. Dans l'automobile, on effectue en général au moins un dépôt sur le pourtour du vitrage sous la forme d'une bande de largeur variable mais néanmoins suffisante pour masquer les éléments situés sous le vitrage, ces derniers pouvant être des adhésifs et/ou des éléments de connexion, notamment électrique, comme indiqué précédemment.

L'épaisseur du dépôt est variable selon l'utilisation envisagée. Dans le cas de la bande précitée, l'épaisseur varie en général de 15 à 35 µm, et de préférence 20 à 28 µm.

Une fois revêtu de la composition selon l'invention, le substrat est porté à une température suffisante pour éliminer l'eau et permettre au dépôt de s'accrocher sur le verre. Cette température est néanmoins inférieure à la température de ramollissement du substrat, ceci afin de prévenir toute déformation du verre engendrant des défauts optiques, ces derniers devant être absolument évités lorsqu'il s'agit de vitrages automobiles tels que les pare-brise. En général, on opère à une température inférieure à 500°C, et de préférence 250°C. On peut à cet effet utiliser tout moyen connu, par exemple des radiations infrarouges ou micro-ondes. Dans le cas où plusieurs couches sont déposées sur le substrat, chaque couche est préférentiellement séchée avant le dépôt de la couche suivante. De préférence, le substrat ne comprend qu'une seule couche d'émail selon l'invention.

La feuille de verre revêtue de la composition d'émail sur au moins une de ses faces, de préférence une seule face, est cuite, la cuisson s'effectuant, le cas échéant, pendant le traitement thermique lié au bombage et/ou à la trempe du substrat.

Le bombage du substrat en verre est effectué selon des méthodes connues en soi à une température de cuisson généralement de l'ordre de 560 à 640°C, de préférence environ 580-600°C (bombage « léger ») et 600-620°C (bombage « profond »), cette température étant atteinte après un temps n'excédant pas préférentiellement une dizaine de minutes. Le bombage peut être réalisé par gravité, comme c'est le cas notamment des substrats en verre bombés par paire dans la réalisation de verres feuilletés, ou à l'aide de matrices.

La trempe du substrat en verre, mise en oeuvre notamment pour les vitrages monolithiques, est effectuée selon des méthodes connues en soi à une température généralement de l'ordre de 640 à 680°C pendant une durée n'excédant pas quelques minutes. Lorsque le substrat est bombé et trempé, la trempe peut être mise en oeuvre après le bombage du substrat émaillé, éventuellement dans un même dispositif.

Dans un mode de réalisation particulièrement avantageux, le substrat revêtu de la composition selon l'invention est une feuille de verre clair d'épaisseur variable (généralement de 1,6 à 2,6 mm, de préférence de 2,1 à 2,6 mm) destinée à former un verre feuilleté, notamment un pare-brise automobile. Dans ce cas, la feuille de verre portant le dépôt d'émail est assemblée à au moins une autre feuille de verre, et les feuilles sont bombées. De préférence, la deuxième feuille de verre est dénuée d'émail et le verre a la même composition que celui de la première feuille. Avantageusement, l'épaisseur de la deuxième feuille de verre est comprise dans les limites précitées, et mieux encore est égale à celle de la première feuille. De manière particulièrement avantageuse, on dispose les feuilles de verre lors du bombage de sorte que la face portant la composition d'émail constitue la face 2 (face interne de la feuille externe) du vitrage feuilleté dans sa position définitive. Les feuilles de verre bombées sont séparées (la séparation étant d'autant plus facile qu'il n'y aucune trace de collage) afin d'y insérer au moins un film intercalaire de matière différente, par exemple une matière organique telle que le polyvinylbutyral, puis assemblées à chaud et sous pression pour former le vitrage feuilleté.

La composition selon l'invention est particulièrement apte à revêtir un substrat en verre non émaillé ou un substrat en verre déjà revêtu d'une ou plusieurs couches d'émail. Ce substrat peut consister en une ou plusieurs feuilles de verre et peut être trempé de façon à présenter des propriétés de résistance mécanique et thermique améliorées. Le substrat revêtu d'émail selon l'invention comprend ainsi au moins une feuille de verre revêtue sur au moins une partie d'une de ses faces d'au moins une couche d'un émail présentant la composition selon l'invention.

Les exemples qui suivent permettent d'illustrer l'invention, sans toutefois la limiter.

Dans les exemples, la température de fusion de la fritte à bas point de fusion est déterminée par la méthode qui consiste à déposer la fritte de verre (épaisseur 15-30 µm) sur une feuille de verre (longueur: 150 mm ; largeurs 60 mm) et à chauffer selon un gradient de température adapté ayant une amplitude égale à environ 100°C (en général, deux gradients de température suffisent, l'un variant de 500 à 600°C, l'autre de 600 à 700°C). Après refroidissement à la température ambiante, on trace un trait de crayon feutre sur la couche vitrifiée obtenue (de la zone de la couche correspondant à la température la plus basse vers celle de température la plus élevée), et on détermine par transparence à travers le substrat le point d'apparition d'une trace brillante (correspondant à la pénétration du (des) solvant(s) dans ladite couche). La température associée au point précité correspond à la température de fusion de la fritte.

Le point de Littleton de la fritte réfractaire est déterminé dans les conditions de la norme ASTM C 338 déjà citée.

### EXEMPLE 1

On prépare une composition d'émail noir par mélange à la température ambiante sous agitation (de l'ordre de 100 RPM) des parties A et B suivantes (en pourcentage pondéral) :

### Partie A :

- silicate de sodium 23
- eau 11
- hydroxyde de sodium en quantité suffisante pour obtenir un pH égal à 10,5.

### Partie B :

- chromite de cuivre 52
- oxyde de zinc 1
- fritte de verre borosilicate de bismuth 13
   (température de fusion de l'ordre de 600°C)

La composition d'émail ainsi préparée est déposée sur une feuille de verre clair (Planilux® ; épaisseur : 2,6 mm) par sérigraphie en milieu humide (épaisseur du dépôt : 25 µm). La feuille revêtue de la composition est portée à 220°C (durée : 3 minutes). Après refroidissement, on obtient un dépôt uniforme, résistant à la rayure et présentant une valeur de L* égale à 18.

Sur un squelette horizontal permettant le bombage, on dispose la feuille en verre précitée (grand verre), la face revêtue de la composition d'émail étant dirigée vers le haut, et une deuxième feuille de 2,1 mm d'épaisseur, de taille légèrement plus faible (petit verre), en verre de même nature que la première mais vierge de toute composition d'émail. L'ensemble est porté à 610-620°C environ (durée : 8-10 minutes), puis refroidi à la température ambiante. Le grand verre est revêtu d'un émail noir d'environ 16 µm d'épaisseur présentant les coordonnées colorimétriques suivantes : L* = 5-6 ; a ≤ 0,5 et b ≤ 0,5 (ces coordonnées étant mesurées en 20 points de la couche d'émail.

### EXEMPLE 2

On prépare une composition d'émail noir par mélange à la température ambiante sous agitation (de l'ordre de 100 RPM) des parties A et B suivantes (en pourcentage pondéral) :

### Partie A :

- silicate de sodium 23
- eau 11
- hydroxyde de sodium en quantité suffisante pour obtenir un pH égal à 10,5

### Partie B :

- chromite de cuivre 41
- oxyde de zinc 3
- fritte de verre borosilicate de bismuth 22
   (température de fusion de l'ordre de 600°C)

La composition d'émail ainsi préparée est déposée sur une feuille de verre clair (Planilux® ; épaisseur : 2,1 mm) par sérigraphie en milieu humide (épaisseur du dépôt : 22 µm). La feuille revêtue de la composition est portée à 220°C (durée : 3 minutes). Après refroidissement, on obtient un dépôt uniforme, résistant à la rayure et présentant une valeur de L* égale à 15.

Sur un squelette horizontal permettant le bombage, on dispose la feuille en verre précitée (grand verre), la face revêtue de la composition d'émail étant dirigée vers le haut, et une deuxième feuille de 2,1 mm d'épaisseur, de taille légèrement plus faible (petit verre), en verre de même nature que la première mais vierge de toute composition d'émail. L'ensemble est porté à 580-600°C environ (durée : 8-10 minutes), puis refroidi à la température ambiante. Le grand verre est revêtu d'un émail noir d'environ 16 µm d'épaisseur présentant les coordonnées colorimétriques suivantes (mesurées dans les conditions de l'exemple 1) : L* = 5-6 ; a ≤ 0,5 et b ≤ 0,5.

### EXEMPLE COMPARATIF

On procède dans les conditions de l'exemple 1 modifié en ce que la composition d'émail est différente, d'une part, et que l'épaisseur de la couche déposée par sérigraphie est égale à 24 µm, d'autre part.

La composition contient (en pourcentage pondéral) :

### Partie A :

- silicate de sodium 25
- eau 15
- hydroxyde de sodium en quantité suffisante pour obtenir un pH égal à 10,5

### Partie B :

- oxyde de cuivre 25
- fritte de verre borosilicate de bismuth 5
   (température de fusion de l'ordre de 680°C)
- fritte de verre sodo-calcique « float » 30
   (point de Littleton de l'ordre de 730°C)

Après le bombage, le grand verre est revêtu d'un émail gris, à tendance jaunâtre, présentant les coordonnées colorimétriques suivantes (mesurées dans les conditions de l'exemple 1) : L* = 15 ; a = 0,8 et b = 1,7.

Dans les exemples selon l'invention, les feuilles de verre émaillées obtenues après l'étape de bombage se séparent facilement (aucun point de collage). De plus, on constate que l'émail porté par la face du grand verre (face 2 du vitrage dans la position finale) est réparti de manière uniforme à la surface du verre et aussi que la face du petit verre (face 3) en contact avec le grand verre ne comporte aucune trace d'émail.

## Revendications

1. Composition d'émail noir à base d'eau, apte à être déposée sur un substrat en verre, comprenant :
- 20 à 40 % en poids de silicate de sodium et/ou de potassium hydrosoluble
- une base hydrosoluble, en quantité suffisante pour que le pH de la composition soit d'au moins 10,5
- 5 à 25 % en poids d'eau
- 40 à 60 % en poids d'oxyde métallique choisi dans le groupe constitué par les oxydes de cuivre, les oxydes de fer, les oxydes de cobalt, les mélanges de ces oxydes, et les mélanges d'au moins un desdits d'oxydes et d'oxyde(s) de chrome
- moins de 10 % en poids d'oxyde de zinc
- au moins 10 % en poids d'une fritte de verre ayant une température de fusion inférieure à 680°C
- moins de 10 % en poids d'une fritte de verre ayant un point de Littleton supérieur à 700°C.

2. Composition selon la revendication 1, **caractérisée en ce que** l'oxyde métallique est choisi parmi les mélanges d'oxyde(s) de chrome et d'oxyde(s) de cuivre et/ou de fer.

3. Composition selon la revendication 2, **caractérisée en ce que** l'oxyde métallique est le chromite de cuivre, le chromite de fer ou un mélange de ces chromites.

4. Composition selon l'une des revendications 1 à 3, **caractérisée en ce que** l'oxyde métallique est entièrement constitué de chromite de cuivre.

5. Composition selon l'une des revendications 1 à 4, **caractérisée en ce qu'**elle comprend 50 à 60 % en poids d'oxyde métallique.

6. Composition selon l'une des revendications 1 à 5, **caractérisée en ce qu'**elle comprend 10 à 30 % en poids de fritte de verre ayant une température de fusion inférieure à 680°C.

7. Composition selon l'une des revendications 1 à 6, **caractérisée en ce qu'**elle comprend 20 à 30 % en poids de silicate de sodium et/ou de potassium hydrosoluble.

8. Composition selon l'une des revendications 1 à 7, **caractérisée en ce qu'**elle comprend de 10 à 20 % en poids d'eau.

9. Composition selon l'une des revendications 1 à 8, **caractérisée en ce qu'**elle comprend 1 à 6 % en poids d'oxyde de zinc.

10. Composition selon l'une des revendications 1 à 9, **caractérisée en ce qu'**elle comprend 4 à 10 % en poids de fritte de verre ayant un point de Littleton supérieur à 700°C.

11. Composition selon l'une des revendications 1 à 10, **caractérisée en ce que** la température de fusion de la fritte de verre est inférieure à 600°C.

12. Composition selon la revendication 11, **caractérisée en ce que** la température de fusion est comprise entre 500 et 600°C.

13. Composition selon l'une des revendications 1 à 12, **caractérisée en ce que** la fritte ayant une température de fusion inférieure à 680°C est une fritte ou un mélange de frittes de verre bismuth-borosilicate, zinc-borosilicate ou plomb-borosilicate.

14. Composition selon l'une des revendications 1 à 13, **caractérisée en ce qu'**elle comporte des ingrédients pour abaisser le coefficient de dilatation, du type silicate de zirconium ou silicate d'aluminium.

15. Composition selon la revendication 14, **caractérisée en ce que** les ingrédients pour abaisser le coefficient de dilatation sont ajoutés dans des proportions de 5 à 25 % et de préférence de 10 à 20 %.

16. Feuille de verre dont au moins une de ses faces est revêtue, au moins partiellement, de la composition d'émail selon l'une des revendications 1 à 15.

17. Feuille de verre selon la revendication 16, **caractérisée en ce qu'**elle est revêtue de la composition selon l'une des revendications 14 ou 15, déposée jusqu'au bord.

18. Vitrage feuilleté, notamment automobile, constitué d'au moins deux feuilles de verre séparées par au moins une feuille de matière organique, ledit vitrage comprenant au moins une feuille de verre revêtue au moins partiellement sur au moins une de ses faces de la composition d'émail selon l'une des revendications 1 à 15.

## Claims

1. Water-based black enamel composition, able to be deposited on a glass substrate, comprising:
- 20% to 40% by weight sodium silicate and/or water-soluble potassium
- a water-soluble base, in sufficient quantity for the pH of the composition to be at least 10.5
- 5% to 25% by weight water
- 40% to 60% by weight metallic oxide chosen from the group consisting of copper oxides, iron oxides, cobalt oxides, mixtures of these oxides, and mixtures of at least one of the said oxides and chromium oxide or oxides
- less than 10% by weight zinc oxide
- at least 10% by weight of a glass frit having a melting point below 680°C
- less than 10% by weight of a glass frit having a Littleton point above 700°C.

2. Composition according to Claim 1, **characterised in that** the metallic oxide is chosen from amongst the mixtures of chromium oxide or oxides and copper and/or iron oxide or oxides.

3. Composition according to Claim 2, **characterised in that** the metallic oxide is copper chromite, iron chromite or a mixture of these chromites.

4. Composition according to one of Claims 1 to 3, **characterised in that** the metallic oxide consists entirely of copper chromite.

5. Composition according to one of Claims 1 to 4, **characterised in that** it comprises 50% to 60% by weight metallic oxide.

6. Composition according to one of Claims 1 to 5, **characterised in that** it comprises 10% to 30% by weight of glass frit having a melting point below 680°C.

7. Composition according to one of Claims 1 to 6, **characterised in that** it comprises 20% to 30% by weight sodium silicate and/or water-soluble potassium.

8. Composition according to one of Claims 1 to 7, **characterised in that** it comprises 10% to 20% by weight water.

9. Composition according to one of Claims 1 to 8, **characterised in that** it comprises 1% to 6% by weight zinc oxide.

10. Composition according to one of Claims 1 to 9, **characterised in that** it comprises 4% to 10% by weight of glass frit having a Littleton point above 700°C.

11. Composition according to one of Claims 1 to 10, **characterised in that** the melting point of the glass frit is below 600°C.

12. Composition according to Claim 11, **characterised in that** the melting point is between 500° and 600°C.

13. Composition according to one of Claims 1 to 12, **characterised in that** the frit having a melting point below 680°C is a frit or a mixture of frits of bismuth-borosilicate, zinc-borosilicate or lead-borosilicate glass.

14. Composition according to one of Claims 1 to 13, **characterised in that** it comprises ingredients for reducing the coefficient of expansion, of the zirconium silicate or aluminium silicate type.

15. Composition according to Claim 14, **characterised in that** the ingredients for reducing the coefficient of expansion are added in proportions from 5% to 25% and preferably from 10% to 20%.

16. Glass sheet, at least one of whose faces is at least partially coated with the enamel composition according to one of Claims 1 to 15.

17. Glass sheet according to Claim 16, **characterised in that** it is coated with the composition according to one of Claims 14 or 15, deposited as far as the edge.

18. Laminated glazing, in particular for a car, consisting of at least two sheets of glass separated by at least one sheet of organic material, the said glazing comprising at least one sheet of glass at least partially coated on at least one of its faces with the enamel composition according to one of Claims 1 to 15.

## Patentansprüche

1. Schwarze Emailzusammensetzung auf Wasserbasis, die in der Lage ist, auf ein Glassubstrat aufgebracht zu werden und
- 20 bis 40 Gew.-% wasserlösliches Natriumsilicat und/oder Kaliumsilicat,
- eine wasserlösliche Base in einer Menge, die ausreicht, damit der pH-Wert der Zusammensetzung mindestens 10,5 beträgt,
- 5 bis 25 Gew.-% Wasser,
- 40 bis 60 Gew.-% Metalloxid, das aus der Gruppe ausgewählt ist, die aus den Oxiden des Kupfers, Eisens und Cobalts, Gemischen aus diesen Oxiden und Gemischen aus mindestens einem dieser Oxide und Chromoxid(en) besteht,
- weniger als 10 Gew.-% Zinkoxid,
- mindestens 10 Gew.-% einer Glasfritte mit einer Schmelztemperatur von unter 680 °C und
- weniger als 10 Gew.-% einer Glasfritte mit einem Littletonpunkt von über 700 °C
umfasst.

2. Zusammensetzung nach Anspruch 1, **dadurch gekennzeichnet, dass** das Metalloxid aus Gemischen aus Chromoxid(en) und Kupferoxid(en) und/oder Eisenoxid(en) ausgewählt ist.

3. Zusammensetzung nach Anspruch 2, **dadurch gekennzeichnet, dass** das Metalloxid Kupferchromit, Eisenchromit oder ein Gemisch aus diesen Chromiten ist.

4. Zusammensetzung nach einem der Ansprüche 1 bis 3, **dadurch gekennzeichnet, dass** das Metalloxid vollständig aus Kupferchromit besteht.

5. Zusammensetzung nach einem der Ansprüche 1 bis 4, **dadurch gekennzeichnet, dass** sie 50 bis 60 Gew.-% Metalloxid enthält.

6. Zusammensetzung nach einem der Ansprüche 1 bis 5, **dadurch gekennzeichnet, dass** sie 10 bis 30 Gew.-% Glasfritte mit einer Schmelztemperatur von unter 680 °C enthält.

7. Zusammensetzung nach einem der Ansprüche 1 bis 6, **dadurch gekennzeichnet, dass** sie 20 bis 30 Gew.-% wasserlösliches Natriumsilicat und/oder Kaliumsilicat enthält.

8. Zusammensetzung nach einem der Ansprüche 1 bis 7, **dadurch gekennzeichnet, dass** sie 10 bis 20 Gew.-% Wasser enthält.

9. Zusammensetzung nach einem der Ansprüche 1 bis 8, **dadurch gekennzeichnet, dass** sie 1 bis 6 Gew.-% Zinkoxid enthält.

10. Zusammensetzung nach einem der Ansprüche 1 bis 9, **dadurch gekennzeichnet, dass** sie 4 bis 10 Gew.-% Glasfritte mit einem Littletonpunkt von über 700 °C enthält.

11. Zusammensetzung nach einem der Ansprüche 1 bis 10, **dadurch gekennzeichnet, dass** die Schmelztemperatur der Glasfritte weniger als 600 °C beträgt.

12. Zusammensetzung nach Anspruch 11, **dadurch gekennzeichnet, dass** die Schmelztemperatur zwischen 500 und 600 °C beträgt.

13. Zusammensetzung nach einem der Ansprüche 1 bis 12, **dadurch gekennzeichnet, dass** die Fritte mit einer Schmelztemperatur von unter 680 °C eine Fritte oder ein Gemisch aus Wismutborosilicat-, Zinkborosilicat- oder Bleiborosilicatglasfritte ist.

14. Zusammensetzung nach einem der Ansprüche 1 bis 13, **dadurch gekennzeichnet, dass** sie den Ausdehnungskoeffizienten senkende Bestandteile vom Typ Zirconiumoder Aluminiumsilicat enthält.

15. Zusammensetzung nach Anspruch 14, **dadurch gekennzeichnet, dass** die den Ausdehnungskoeffizienten senkenden Bestandteile mit Anteilen von 5 bis 25 % und vorzugsweise 10 bis 20 % zugesetzt werden.

16. Glasscheibe, wovon mindestens eine Seite wenigstens teilweise mit der Emailzusammensetzung nach einem der Ansprüche 1 bis 15 beschichtet ist.

17. Glasscheibe nach Anspruch 16, **dadurch gekennzeichnet, dass** sie mit der Zusammensetzung nach Anspruch 14 oder 15 beschichtet ist, die bis zum Rand aufgebracht worden ist.

18. Verbundglasscheibe, insbesondere ein Autoglas, welche aus mindestens zwei Glasscheiben besteht, die durch mindestens eine Folie aus einem organischen Material voneinander getrennt sind, wobei die Verbundglasscheibe mindestens eine Glasscheibe umfasst, die auf mindestens einer Seite wenigstens teilweise mit der Emailzusammensetzung nach einem der Ansprüche 1 bis 15 beschichtet ist.
